Europäisches Patentamt

European Patent Office

Office européen des brevets

(19)

(11) Veröffentlichungsnummer : **0 094 375**
**B1**

(12) **EUROPÄISCHE PATENTSCHRIFT**

(45) Veröffentlichungstag der Patentschrift :
10.09.86

(51) Int. Cl.⁴ : **A 43 D 65/00, C 08 J 9/32**

(21) Anmeldenummer : **83890073.6**

(22) Anmeldetag : **06.05.83**

(54) Verfahren zur Herstellung einer elastischen Schuhsohle und Form zur Durchführung des Verfahrens.

(30) Priorität : 06.05.82 DE 3216966

(43) Veröffentlichungstag der Anmeldung :
16.11.83 Patentblatt 83/46

(45) Bekanntmachung des Hinweises auf die Patenterteilung : 10.09.86 Patentblatt 86/37

(84) Benannte Vertragsstaaten :
AT DE FR GB IT NL SE

(56) Entgegenhaltungen :
EP-A- 0 029 021
EP-A- 0 032 720
EP-A- 0 072 364
DE-B- 2 639 823
US-A- 3 791 050

(73) Patentinhaber : SECANS AG
c/o Dr. Barth Gartenstrasse 2
CH-6300 Zug (CH)

(72) Erfinder : Schaefer, Helmut
Winzlerstrasse 114
D-6780 Pirmasens (DE)
Erfinder : Schaefer, Philipp
Oberstrasse 16
D-3000 Hannover 1 (DE)

(74) Vertreter : Boeckmann, Peter, Dipl.-Ing. et al
Patentanwälte Dipl.-Ing. Peter Boeckmann, Dipl.-Ing.
Leo Brauneiss Strohgasse 10
A-1030 Wien (AT)

**Beschreibung**

Die Erfindung betrifft ein Verfahren zur Herstellung einer elastischen Schuhsohle, vorzugsweise aus Polyurethan, insbesondere für Sportund Arbeitsschuhe, durch Einfüllen eines fließbaren Reaktionsgemisches in einen Formhohlraum. Weiters betrifft die Erfindung eine Form zur Durchführung dieses Verfahrens.

Unter dem Begriff « Schuhsohle » sollen hiebei auch Teile von Schuhsohlen verstanden werden, also beispielsweise Schuhsohlenvorderteile oder Absatzflecke, wobei diese Teile mit den nach einem anderen Verfahren hergestellten Schuhsohlenteilen zusammenhängen können oder nicht. Ferner soll unter dem Begriff « Schuhsohle » auch bestimmte Abschnitte einer Schuhsohle verstanden werden, also beispielsweise die Brandsohle, das Fußbett, die Zwischensohle, die Laufsohle usw.

Schuhsohlen aus Polyurethan sind bereits bekannt. Diese Schuhsohlen bestehen stets aus geschäumtem, also Zellen aufweisenden Polyurethan, um das Gewicht der Schuhsohlen zu reduzieren. Bei der Herstellung der bisher bekannten Schuhsohlen wird so vorgegangen, daß die das Polyurethan bildenden, ein Treibmittel enthaltenden Reaktionspartner in eine Form eingefüllt und dort ausschäumen gelassen werden. Derartige, durch eine Polyaddition der flüssigen Reaktionspartner hergestellte geschäumte Polyurethansohlen besitzen in der Regel mehr als 50 % offene und weniger als 50 % geschlossene Zellen. Die Nachteile, die sich aus den verhältnismäßig vielen offenen Zellen ergeben, sind bekannt und in der EP-A1-0 029 021 beschrieben. Dort sind auch Maßnahmen zur Behebung dieser Nachteile erläutert.

Zur Reduzierung des Anteils an offenen Zellen, bzw. zur Erhöhung des Anteils an geschlossenen Zellen innerhalb einer Sohle wurde bereits vorgeschlagen, eine Form mit einem schäumbaren, Polyurethan bildenden Reaktionsgemisch, welches Mikrohohlkugeln aus Polyvinyllidenchlorid-Copolymerisat enthält, teilweise auszufüllen, wobei der nicht ausgefüllte Teil des Formenhohlraumes durch das aufschäumende und sich verfestigende Reaktionsgemisch ausgefüllt wird. Durch die Maßnahme wird zwar der Anteil an offenen Zellen reduziert, ganz können sie auf diese Weise jedoch nicht ausgeschlossen werden.

Es wurde auch vorgeschlagen, eine Form mit einem treibmittelfreien, Polyurethan bildenden Reaktionsgemisch, in welchem sich kleinste kompakte Teilchen aus einem Polyvinyllidenchlorid-Copolymerisat befinden, die eingekapselt ein Treibmittel enthalten, teilweise auszufüllen, wobei die Mikrohohlkugeln mittels Wärme durch eine Expansion der kompakten Teilchen in situ entstehen, und somit den nicht ausgefüllten Formenhohlraum mit dem sich bildenden Polyurethan, in das sie eingebettet sind, ausfüllen. Danach ist es zwar möglich, gleichmäßig dünne plattenartige Formteile mit einer gleichmäßigen geschlossenen Struktur herzustellen. Die Herstellung eines so unterschiedlich dicken Formteiles wie einer Schuhsohle, die naturgemäß dicke und dünne Bereiche besitzt, und die eine homogene geschlossenzellige Struktur aufweist, ist aber mit diesem Verfahren sehr schwierig durchzuführen, wenn nicht sogar unmöglich. Die Schwierigkeiten bestehen darin, daß das dem Formhohlraum teilweise ausfüllende Reaktionsgemisch innerhalb kurzer Zeit an jeder Stelle gleichzeitig auf eine gleichmäßige Temperatur von mehr als + 92 °C erwärmt werden muß, damit die Mikrohohlkugeln nahezu zur gleichen Zeit im sich bildenden, aber noch flüssigen Polyurethan aus den kompakten Teilchen entstehen können.

Dies ist bei Schuhsohlen, die dicke und dünne Bereiche haben, unmöglich. Die Masse, welche mit der warmen Innenwand des Formhohlraumes Kontakt hat, erwärmt sich ziemlich schnell auf eine Temperatur von mehr als + 92 °C. In diesem Kontaktbereich der Masse mit der Formwand bilden sich dann die Mikrohohlkugeln aus den kompakten Teilchen früher als im mittleren Bereich des Formhohlraumes, und diese Mikrohohlkugeln verhindern durch ihre Isoliereigenschaften die rasche weitere Durchwärmung der Masse. Versucht man z. B. die Mikrohohlkugeln mittels einer Reaktionstemperatur zu bilden, so entstehen sie zuerst dort, wo sich die größte Menge des Reaktionsgemisches in der Sohlenform befindet, weil dort die zur Bildung der Mikrohohlkugeln erforderliche Temperatur am schnellsten erreicht wird. Die expandierende, geschlossenzellige Masse breitet sich unkontrollierbar in der Sohlenform aus und stört das Gefüge der noch nicht auf + 92 °C erwärmten Masse. Die so hergestellten Schuhsohlen sind gekennzeichnet durch Schaumüberrollungen, Fließlinien und besitzen keine homogene geschlossenzellige Struktur.

Ein weiterer Nachteil aller bekannten Verfahren zur Herstellung geschäumter Schuhsohlen aus flüssigen Reaktionspartnern besteht darin, daß an den Sohlen mehr oder weniger starke Liegezonen sichtbar sind, die insbesondere bei dunklen Farben durch eine zusätzliche Lackierung entfernt werden müssen.

Der Erfindung liegt die Aufgabe zugrunde, ein Verfahren zu entwickeln, nach welchem aus bekannten flüssigen Reaktionspartnern, die durch eine Polyaddition verfestigt werden, eine Schuhsohle hergestellt wird, die praktisch zur Gänze geschlossene Zellen aufweist und bei der die geschlossenen Zellen homogen verteilt sind, sowie auf deren Oberfläche sich keine Liegezonenmarkierung befindet. Diese Aufgabe wird erfindungsgemäß dadurch gelöst, daß in den Formhohlraum ein bereits überwiegend geschlossene Zellen aufweisendes, im wesentlichen treibmittelfreies Reaktionsgemisch eingefüllt wird und dort durch Polyaddition verfestigen gelassen wird.

Zum Unterschied von den bekannten Verfahren wird also beim erfindungsgemäßen Verfahren in den Formhohlraum ein Reaktionsgemisch eingefüllt, welches bereits beim Einfüllen gleichmäßig verteilt geschlossene Zellen aufweist, wobei dadurch, daß ein im wesentlichen treibmittelfreies Reaktionsgemisch verwendet wird, sich beim Verfestigen praktisch keine weiteren Zellen bilden, die das durch die bereits vorhandenen Zellen bestimmte Gefüge der Sohle stören würden. Während somit bei den bisher bekannten Verfahren parallel zum Polyadditionsablauf zumindest teilweise auch ein Schäumvorgang erfolgte, wodurch zumindest teilweise Zellen entstanden, werden beim erfindungsgemäßen Verfahren diese Zellen außerhalb des Formhohlraumes im Reaktionsgemisch gebildet und es erfolgt im Formhohlraum lediglich die Verfestigung des Reaktionsgemisches durch Polyaddition. Dadurch wird auch die Herstellung der Schuhsohle wesentlich vereinfacht, wobei außerdem im Formhohlraum praktisch keine Drücke entstehen, wogegen beim bekannten Verfahren durch den Schäumvorgang in der Form diese einem erheblichen Druck ausgesetzt ist. Dies bringt den Vorteil mit sich, daß die Form leichter und aus Materialien gebaut werden kann, welche beispielsweise ein leichtes Entformen ohne Verwendung eines zusätzlichen Trennmittels ermöglichen. Solche Materialien, aus welchen die Form zur Durchführung des erfindungsgemäßen Verfahrens bestehen kann, sind beispielsweise Silikon, Polyolefine und/oder Acrylglas.

Die nach dem erfindungsgemäßen Verfahren hergestellten Schuhsohlen besitzen weiters keine Liegezone mehr, wodurch sich das Aufbringen eines Lackfinish erübrigt. Es können dadurch Kosten für Material und Arbeit eingespart werden.

Die geschlossenen Zellen haben eine Größe von 10 bis 100 Mikron, wobei ca. 80 % aller Zellen eine Größe von 20 bis 60 Mikron aufweisen. Die erfindungsgemäße Formsohle hat eine Dichte von 0,28 bis 0,95, vorzugsweise von 0,35 bis 0,75.

Gemäß einer bevorzugten Variante des erfindungsgemäßen Verfahrens enthält das Reaktionsgemisch die geschlossenen Zellen bildende Mikrohohlkugeln, deren dünne Hülle aus Vinylidenchlorid-Copolymerisat besteht, und deren Inneres ein Gas enthält. Diese Mikrohohlkugeln verbessern auch die Fließeigenschaften des Reaktionsgemisches, da durch die glatte Oberfläche der Mikrohohlkugeln und durch ihr geringes Gewicht die innere Reibung der Masse herabgesetzt wird. Diese Verbesserung der Fließeigenschaften ist vor allem dann von Vorteil, wenn das Reaktionsgemisch in eine geschlossene Form über eine oder mehrere Öffnungen, vorzugsweise unter Druck, eingefüllt und verfestigen gelassen wird. Vor allem dann, wenn kleine Hohlräume im Bereich der Formwandung auszufüllen sind, ist es zweckmäßig, wenn erfindungsgemäß die Form vor dem Einfüllen des Reaktionsgemisches evakuiert wird. Das Vakuum in der Form bewirkt dann, daß das Reaktionsgemisch in die Form hineingesaugt wird und sich dort auch in kleinsten Hohlräumen gleichmäßig verteilt, da sich dann in diesen Hohlräumen keine Luftblasen bilden können, die das Eindringen des Reaktionsgemisches verhindern. Auch bei dünnwandigen Formen ist das Anlegen von Vakuum zweckmäßig, da dadurch vermieden wird, daß sich beim Einbringen des Reaktionsgemisches in die Form unter Druck die Formwandung in unerwünschter Weise verformt.

Zweckmäßig wird der Druck, mit welchem das Reaktionsgemisch in die Form eingefüllt wird, auf einen vorbestimmten Wert eingestellt, also geregelt. So kann das flüssige, bereits geschlossene Zellen in homogener Verteilung aufweisende Reaktionsgemisch mit einem Einspritz- bzw. Einpreßdruck bis zu etwa 18 bar durch eine oder mehrere Öffnungen mit einem geringen Querschnitt in die geschlossene Form transportiert werden, ohne daß die Schaumstruktur dabei zusammenfällt oder sich das Volumen wesentlich verändert. Es kann aber auch der sich beispielsweise in einem Druckzylinder druckelastisch verhaltende flüssige Schaum mit einem höheren Einpreßdruck in die Form transportiert und dort verdichtet werden, wobei durch Änderung des Einpreßdruckes die Dichte der herzustellenden Sohle durch Komprimierung der geschlossenen Zellen verändert und an die jeweiligen Erfordernisse angepaßt werden kann.

Wird das Reaktionsgemisch mit geringem Druck in die Form eingefüllt, bis der Formhohlraum zur Gänze ausgefüllt ist, so wird durch die tixotropen Eigenschaften, die durch Beimengung der Mikrohohlkugeln entstehen, verhindert, daß das Reaktionsgemisch vor der Verfestigung wieder aus den Einfüllöffnungen herausfließt. Wird das Reaktionsgemisch unter höherem Druck unter Ausnützung der druckelastischen Eigenschaften in den Formhohlraum gepreßt, so müssen die Einfüllöffnungen bis zum Verfestigen der Masse verschlossen werden.

Es kann aber auch so vorgegangen werden, daß das Reaktionsgemisch in den offenen Formhohlraum bis zu einem Niveau, welches der Begrenzung der herzustellenden Sohle entspricht, eingefüllt wird, wobei dann zweckmäßig der Formhohlraum nach dem Einfüllen des Reaktionsgemisches, jedoch vor dem Verfestigen desselben, durch einen Verschlußteil abgedeckt wird. Als Verschlußteil kann hiebei auch eine flächige Abdeckung für die Schuhsohle, beispielsweise Naturleder, Kunstleder, Textilmaterial od. dgl., verwendet werden, die dann bei der Herstellung der Sohle untrennbar mit dieser verbunden wird.

Zur Herstellung der erfindungsgemäßen Formsohle eignen sich alle an sich bekannten bei einer Temperatur von weniger als + 55 °C flüssigen Komponenten, die nach Zusammenmischen durch eine Polyaddition fest werden, und vorzugsweise ein Polyurethan bilden.

Die flüssigen Ausgangskomponenten, die das Reaktionsgemisch darstellen, welches als Einbettmasse für die Mikrohohlkugeln dient, sind vorzugsweise im wesentlichen Polyole und Isocy-

anate, sowie Vernetzer. Im Rahmen der Erfindung kann anstelle eines Polyols aber auch flüssiges Polybutadien, das freie OH-Gruppen aufweist, allein oder in einer Abmischung mit einem Polyol verwendet werden. Die flüssige reaktionsfähige Einbettmasse kann auch ein Pre-Polymer sein.

Dem Reaktionsgemisch, insbesondere wenn es Polybutadien enthält, können auch Füllstoffe, Pigmente oder flüssige Zuschlagstoffe, die eine weichmachende Wirkung besitzen, wie beispielsweise Paraffinöle, beigemengt werden.

Weiters können in den Formhohlraum vor dem Einfüllen des fließbaren Reaktionsgemisches Verstärkungs-, Versteifungs- und/oder Befestigungselemente für den Schuhoberteil eingelegt werden.

Bei Anwendung des erfindungsgemäßen Verfahrens ist es auch möglich, bei der Herstellung der Schuhsohle während des Verfestigungsvorganges derselben den Schuhschaft mit der Schuhsohle in einem Arbeitsvorgang zu verbinden. Hiebei wird so vorgegangen, daß der Schuhschaft auf einem Leisten aufgespannt wird, der teilweise die Begrenzung des Formhohlraumes bildet, in den das Reaktionsgemisch unter Druck eingefüllt wird, oder jene Abdeckung bildet, mit welcher der Formhohlraum nach dem Einfüllen des Reaktionsgemisches abgedeckt wird. Die durch eine Polyaddition sich verfestigende Sohle verbindet sich dann in hervorragender Weise mit dem Schuhschaft. Im Gegensatz zum bekannten Verfahren, wo beim Schäumvorgang ein unkontrollierbarer Innendruck im Formhohlraum entsteht, kann bei Anwendung des erfindungsgemäßen Verfahrens, wie bereits erwähnt, der Innendruck in der Form auf jeden gewünschten Wert eingestellt werden, was bei der erwähnten Verbindung zwischen Sohle und Schuhschaft den Vorteil mit sich bringt, daß ein Austrieb des Sohlenmateriales mit Sicherheit verhindert werden kann. Das in den Formhohlraum eingefüllte Reaktionsmaterial kann beim erfindungsgemäßen Verfahren weiters volumsmäßig genau dem Volumen dieses Formhohlraumes entsprechen, so daß auch hiedurch ein Austrieb mit Sicherheit vermieden wird.

**Patentansprüche**

1. Verfahren zur Herstellung einer elastischen Schuhsohle, vorzugsweise aus Polyurethan, insbesondere für Sport- und Arbeitsschuhe, durch Einfüllen eines fließbaren Reaktionsgemisches in einen Formhohlraum, dadurch gekennzeichnet, daß in den Formhohlraum ein bereits überwiegend geschlossene Zellen aufweisendes, im wesentlichen treibmittelfreies Reaktionsgemisch eingefüllt wird und dort durch Polyaddition verfestigen gelassen wird.

2. Verfahren nach Anspruch 1, dadurch gekennzeichnet, daß das Reaktionsgemisch vor dem Einfüllen in den Formhohlraum die geschlossenen Zellen bildende Mikrohohlkugeln enthält, deren dünne Hülle aus Vinylidenchlorid-Copolymerisat besteht und deren Inneres ein Gas enthält.

3. Verfahren nach Anspruch 1 oder 2, dadurch gekennzeichnet, daß das Reaktionsgemisch in eine geschlossene Form über eine oder mehrere Öffnungen, vorzugsweise unter Druck, eingefüllt und verfestigen gelassen wird.

4. Verfahren nach Anspruch 1, 2 oder 3, dadurch gekennzeichnet, daß die Form vor dem Einfüllen des Reaktionsgemisches evakuiert wird.

5. Verfahren nach Anspruch 3, dadurch gekennzeichnet, daß der Druck, mit welchem das Reaktionsgemisch in die Form eingefüllt wird, auf einen vorbestimmten Wert eingestellt bzw. geregelt wird.

6. Verfahren nach Anspruch 1 oder 2, dadurch gekennzeichnet, daß das Reaktionsgemisch in den offenen Formhohlraum bis zu einem Niveau, welches der Begrenzung der herzustellenden Sohle entspricht, eingefüllt wird.

7. Verfahren nach Anspruch 6, dadurch gekennzeichnet, daß der Formhohlraum nach dem Einfüllen des Reaktionsgemisches, jedoch vor dem Verfestigen desselben, durch einen Verschlußteil abgedeckt wird.

8. Verfahren nach Anspruch 7, dadurch gekennzeichnet, daß als Verschlußteil eine flächige Abdeckung für die Schuhsohle, beispielsweise Naturleder, Kunstleder, Textil-material od. dgl. verwendet wird.

9. Verfahren nach einem der Ansprüche 1 bis 8, dadurch gekennzeichnet, daß das Reaktionsgemisch Polybutadien enthält.

10. Verfahren nach einem der Ansprüche 1 bis 9, dadurch gekennzeichnet, daß dem Reaktionsgemisch Füllstoffe, Pigmente oder flüssige Zuschlagstoffe, die eine weichmachende Wirkung besitzen, wie beispielsweise Paraffinöle, beigemengt werden.

11. Verfahren nach einem der Ansprüche 1 bis 10, dadurch gekennzeichnet, daß in den Formhohlraum vor dem Einfüllen des fließbaren Reaktionsgemisches Verstärkungs-, Versteifungs- und/oder Befestigungselemente eingelegt werden.

12. Form zur Durchführung des Verfahrens nach einem der Ansprüche 1 bis 11, dadurch gekennzeichnet, daß die Innenwand des Formhohlraumes zumindest teilweise aus Silikon, Polyolefinen und/oder Acrylglas besteht.

13. Form zur Durchführung des Verfahrens nach einem der Ansprüche 1 bis 11, dadurch gekennzeichnet, daß die Begrenzung des Formhohlraumes teilweise von einem auf einem Leisten aufgespannten Schuhschaft gebildet ist, mit dem die Sohle sich beim Verfestigen des Reaktionsgemisches fest verbindet.

14. Form nach Anspruch 13, dadurch gekennzeichnet, daß der auf einem Leisten aufgespannte Schuhschaft den Verschlußteil nach Anspruch 6 bildet.

**Claims**

1. Method for the manufacture of an elastic shoe sole, preferably of polyurethane, in particular for sports-shoes and working shoes, by introducing a flowable reaction mixture into a mould cavity, characterized in that a reaction mixture, which has already mainly closed cells and which is essentially free of inflating agent, is filled into the mould cavity and is there allowed to solidify by polyaddition reaction.

2. Method according to claim 1, characterized in that the reaction mixture contains, prior to being introduced into the mould cavity, hollow microspheres providing the closed cells, the thin shells of the microspheres consisting of a vinylidene chloride copolymer and the interior of the microspheres containing a gas.

3. Method according to claim 1 or 2, characterized in that the reaction mixture is introduced into a closed mould, preferably under pressure, via one or more openings and is allowed to solidify.

4. Method according to claim 1, 2 or 3, characterized in that the mould is evacuated prior to introducing the reaction mixture.

5. Method according to claim 3, characterized in that the pressure, with which the reaction mixture is introduced into the mould, is adjusted to a predetermined value or controlled, respectively.

6. Method according to claim 1 or 2, characterized in that the reaction mixture is introduced into the open mould cavity up to a level corresponding to the boundary of the sole to be manufactured.

7. Method according to claim 6, characterized in that the mould cavity is covered by a closure member after having introduced the reaction mixture but still prior to solidification of the reaction mixture.

8. Method according to claim 7, characterized in that the closure member used is a laminar cover for the shoe sole, for example natural leather, artificial leather, textile material or the like.

9. Method according to any of claims 1 to 8, characterized in that the reaction mixture contains polybutadiene.

10. Method according to any of claims 1 to 9, characterized in that there are incorporated into the reaction mixture fillers, pigments or liquid additives having a plasticizing effect, such as paraffine oil.

11. Method according to any of claims 1 to 10, characterized in that, prior to introducing the flowable reaction mixture, there are placed into the mould cavity reinforcing elements, stiffening elements and/or fastening elements.

12. Mould for performing the method according to any of claims 1 to 11, characterized in that the internal wall of the mould cavity consists at least partially of silicone, polyolefins and/or acrylic glass.

13. Mould for performing the method according to any of claims 1 to 11, characterized in that the boundary of the mould cavity is at least partially formed of a shoe upper put on a last, the sole becoming firmly connected with the upper on solidification of the reaction mixture.

14. Mould according to claim 13, characterized in that the shoe upper put on the last forms the closure member according to claim 6.

**Revendications**

1. Procédé de fabrication d'une semelle élastique de chaussure, de préférence en polyuréthane, notamment pour des chaussures de sport et de travail, par versement, dans la cavité d'un moule, d'un mélange réactionnel apte à la coulée, caractérisé en ce qu'on verse dans la cavité du moule un mélange réactionnel présentant déjà en majeure partie des alvéoles fermés et essentiellement exempt d'agent moussant et qu'on l'y laisse durcir par polyaddition.

2. Procédé selon la revendication 1, caractérisé en ce que le mélange réactionnel contient, avant le versement dans la cavité du moule, des microbilles creuses donnant les alvéoles fermés, dont l'enveloppe mince consiste en un copolymère de chlorure de vinylidène et dont l'intérieur contient un gaz.

3. Procédé selon la revendication 1 ou 2, caractérisé en ce qu'on verse le mélange réactionnel dans un moule fermé, par une ou plusieurs ouvertures et de préférence sous pression, et on l'y laisse durcir.

4. Procédé selon la revendication 1, 2 ou 3, caractérisé en ce qu'on met le moule sous vide avant le versement du mélange réactionnel.

5. Procédé selon la revendication 3, caractérisé en ce qu'on fixe ou règle à une valeur prédéterminée la pression sous laquelle on verse le mélange réactionnel dans le moule.

6. Procédé selon la revendication 1 ou 2, caractérisé en ce qu'on verse le mélange réactionnel dans la cavité de moule ouverte jusqu'à un niveau qui correspond à la limite de la semelle en cours de fabrication.

7. Procédé selon la revendication 6, caractérisé en ce que, à l'aide d'une pièce de recouvrement, on recouvre la cavite du moule après le versement du mélange réactionnel, mais toutefois avant le durcissement de celui-ci.

8. Procédé selon la revendication 7, caractérisé en ce qu'on utilise comme pièce de recouvrement une couverture en feuille pour la semelle de chaussure, par exemple du cuir naturel, du cuir synthétique, une matière textile ou analogue.

9. Procédé selon l'une des revendications 1 à 8, caractérisé en ce que le mélange réactionnel contient du polybutadiène.

10. Procédé selon l'une des revendications 1 à 9, caractérisé en ce qu'on ajoute au mélange réactionnel des charges, des pigments ou des additifs liquides qui possèdent une action plastifiante, comme par exemple des huiles de paraffine.

11. Procédé selon l'une des revendications 1 à 10, caractérisé en ce qu'on met en place des éléments de renforcement, de raidissement et/ou de fixation dans la cavité du moule avant le versement du mélange réactionnel apte à la coulée.

12. Moule pour la mise en œuvre du procédé selon l'une des revendications 1 à 11, caractérisé en ce que la paroi intérieure de la cavité du moule est constituée au moins partiellement d'un silicone, de polyoléfines et/ou d'un verre acrylique.

13. Moule pour la mise en œuvre du procédé selon l'une des revendications 1 à 11, caractérisé en ce que la limite de la cavité du moule est constituée partiellement par une tige de chaussure tendue sur une forme et avec laquelle la semelle est reliée à demeure lors du durcissement du mélange réactionnel.

14. Moule selon la revendication 13, caractérisé en ce que la tige de chaussure tendue sur une forme constitue la pièce de recouvrement selon la revendication 6.